(19) Europäisches Patentamt
European Patent Office
Office européen des brevets

(11) Veröffentlichungsnummer : **0 290 386 B1**

# (12) EUROPÄISCHE PATENTSCHRIFT

(45) Veröffentlichungstag der Patentschrift :
**10.06.92 Patentblatt 92/24**

(51) Int. Cl.$^5$ : **C08K 5/00,** C08K 13/02, C08K 5/34, C08K 3/22, C08K 5/09, C08K 5/13, C08L 23/02

(21) Anmeldenummer : **88810265.4**

(22) Anmeldetag : **26.04.88**

## (54) Stabilisierung von organischen Polymeren gegen Lichtabbau.

(30) Priorität : **05.05.87 CH 1709/87**

(43) Veröffentlichungstag der Anmeldung :
**09.11.88 Patentblatt 88/45**

(45) Bekanntmachung des Hinweises auf die Patenterteilung :
**10.06.92 Patentblatt 92/24**

(84) Benannte Vertragsstaaten :
**DE FR GB IT**

(56) Entgegenhaltungen :
**GB-A- 2 132 621**
**US-A- 4 256 627**

(73) Patentinhaber : **CIBA-GEIGY AG**
**Klybeckstrasse 141**
**CH-4002 Basel (CH)**

(72) Erfinder : **Gugumus, François, Dr.**
**Ochsenstrasse 20**
**CH-4123 Allschwil (CH)**

EP 0 290 386 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft die Stabilisierung von organischen Polymeren gegen Lichtabbau durch Zusatz eines Gemisches aus einem speziellen Polyalkylpiperidinderivat und einer Magnesium- oder Zinkverbindung.

Es ist bekannt, dass die Lichtschutzwirkung von Polyalkylpiperidin-Stabilisatoren durch den Zusatz von Metallverbindungen gesteigert werden kann. So wurden in der US-A-4,202,816 Komplexe von verschiedenen niedermolekularen Polyalkylpiperidinen mit Metallverbindungen, wie z.B. Nickel-, Kobalt-, Mangan- oder Magnesium-acetylacetonat, Nickellaurat und -önanthat, Zinklaurat oder Zinkacetat beschrieben. In der US-A-4,256,627 werden ähnliche Gemische von polymeren Polyalkylpiperidinen und Metallverbindungen beschrieben, wobei als Metallverbindungen z.B. Nickel-acetat und -laurat, Zink-önanthat sowie Nickel- und Kobalt-acetylacetonat genannt werden. Es wurde gefunden, dass bestimmte Polyester mit Tetramethylpiperidingruppen im Gemisch mit Magnesium- oder Zinkverbindungen einen besonders ausgeprägten Synergismus bei der Stabilisierung von organischen Polymeren gegen Lichtabbau zeigen. Gegenstand der Erfindung ist daher ein organisches Polymer, enthaltend als Stabilisator gegen Lichtabbau

a) ein Polyalkylpiperidin-Lichtschutzmittel der Formel I,

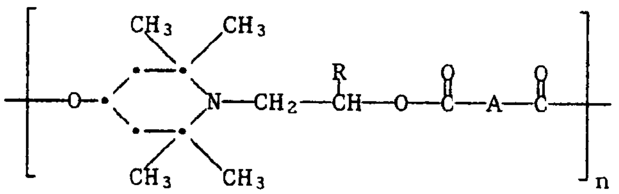

I

worin R Wasserstoff oder Methyl ist, A ein unverzweigter oder verzweigter Alkylenrest mit 2 bis 10 C-Atomen ist und n einen Wert von 2-50 bedeutet, und

b) eine Magnesium- oder Zinkverbindung aus der Reihe der Oxide, Hydroxide, Carboxylate, Enolate oder Phenolate, wobei im Falle von Polyethylen die Komponente (b) kein Oxid oder Hydroxid von Mg oder Zn ist, und wobei im Falle der Stabilisierung von Polyolefinen mit Magnesium- oder Zinksalzen kein UV-Absorber und kein Pigment zugesetzt wird.

Als organische Polymere, die erfindungsgemäss stabilisiert werden können, kommen beispielsweise folgende in Betracht:

1. Polymere von Mono- und Diolefinen, beispielsweise Polypropylen, Polyisobutylen, Polybuten-1, Polymethylpenten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen niederer Dichte (LDPE), lineares Polyethylen niederer Dichte (LLDPE).

2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B LDPE/HDPE).

3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander und mit unter 1) genannten Polymeren, z.B. Polypropylen Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere und LLDPE/Ethylen-Acrylsäure-Copolymere.

3a. Kohlenwasserstoffharze (z.B. $C_5$-$C_9$) inklusive hydrierte Modifikationen davon (z.B. Klebrigmacherharze).

4. Polystyrol, Poly-(p-methylstyrol), Poly-($\alpha$-methylstyrol).

5. Copolymere von Styrol oder $\alpha$-Methylstyrol mit Dienen oder Acrylderivaten, wie z.B. Styrol-Butadien, Styrol-Acrylnitril, Styrol-Alkylmethacrylat, Styrol-Butadien-Alkylacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol,

Styrol-Ethylen/Butylen-Styrol oder Styrol-Ethylen/Propylen-Styrol.

6. Pfropfcopolymere von Styrol oder α-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 5) genannten Copolymeren, wie sie z.B. als sogenannte ABS-, MBS-, ASA- oder AES-Polymere bekannt sind.

7. Halogenhaltige Polymere, wie z.B. Polychloropren, Chlorkautschuk, chloriertes oder chlorsulfoniertes Polyethylen, Epichlorhydrinhomo- und -copolymere, insbesondere Polymere aus halogenhaltigen Vinylverbindun gen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

8. Polymere, die sich von α,ß-ungesättigten Säuren und deren Derivaten ableiten, wie Polyacrylate und Polymethacrylate, Polyacrylamide und Polyacrylnitrile.

9. Copolymere der unter 8) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

10. Polymere, die sich von ungesättigten Alkoholen und Aminen bzw. deren Acrylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.

11. Homo- und Copolymere von cyclischen Ethern, wie Polyalkylenglykole, Polyethylenoxyd, Polypropylenoxyd oder deren Copolymere mit Bisglycidylethern.

12. Polyacetale, wie Polyoxymethylen, sowie solche Polyoxymethylene, die Comonomere, wie z.B. Ethylenoxid, enthalten; Polyacetale, die mit termoplastischen Polyurethanen, Acrylaten oder MBS modifiziert sind.

13. Polyphenylenoxide und -sulfide und deren Mischungen mit Styrolpolymeren oder Polyamiden.

14. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

15. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, Polyamid 11, Polyamid 12, aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid, Poly-m-phenylen-isophthalamid. Block-Copolymere der vorstehend genannten Polyamide mit Polyolefinen, Olefin-Copolymeren, Ionomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

16. Polyharnstoffe, Polyimide, Polyamid-imide und Polybenzimidazole.

17. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.

18. Polycarbonate und Polyestercarbonate.

19. Polysulfone, Polyethersulfone und Polyetherketone.

20. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

21. Trocknende und nicht-trocknende Alkydharze.

22. Ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

23. Vernetzbare Acrylharze, die sich von substituierten Acrylsäureestern ableiten, wie z.B. von Epoxyacrylaten, Urethan-acrylaten oder Polyester-acrylaten.

24. Alkydharze, Polyesterharze und Acrylatharze, die mit Melaminharzen, Harnstoffharzen, Polyisocyanaten oder Epoxidharzen vernetzt sind.

25. Vernetzte Epoxidharze, die sich von Polyepoxiden ableiten, z.B. von Bis-glycidylethern oder von cycloaliphatischen Diepoxiden.

26. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose; sowie Kolophoniumharze und Derivate.

27. Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO.

Bevorzugt sind dabei synthetische Polymere, insbesondere thermoplastische Kunststoffe, vor allem Polyolefine, insbesondere Polypropylen.

Die Polyalkylpiperidin-Lichtschutzmittel der Formel I sind in der US-A-4,233,412 beschrieben. Der Rest A kann z.B. Di-, Tri-, Tetra-, Hexa-, Octa- oder Decamethylen, Propylen-1,2, Butylen-1,2, 1,1,3-Trimethyl-tetramethylen oder 2,2-Dimethyl-trimethylen sein.

Bevorzugt verwendet man als Lichtschutzmittel einen Polyester der Formel Ia,

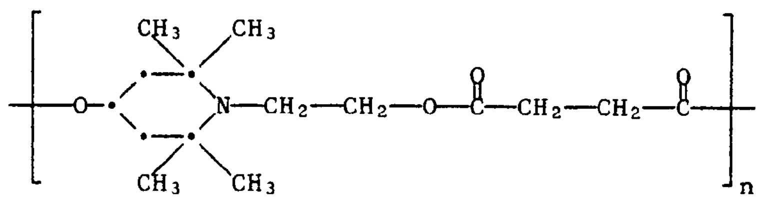

Ia

worin n ein Wert von 5-20 ist.

Die Verbindungen der Formel I werden durch Polykondensation von 1-(2-Hydroxyethyl)- oder 1-(2-Hydroxypropyl)-2,2,6,6-tetramethylpiperidinol-4 mit einer Dicarbonsäure HOOC-A-COOH oder deren Säurechlorid oder deren Dialkylester hergestellt. Dabei entsteht ein Gemisch von Polyestern mit verschiedenem Polykondensationsgrad n. Der für ein solches Gemisch ermittelte Wert n stellt daher einen Durchschnittswert dar. Er kann 2-50 betragen. Vorzugsweise beträgt er 5-20.

Die als Komponente (b) verwendbaren Magnesium- und Zinkverbindungen können Oxide, Hydroxyide, Carboxylate, Enolate oder Phenolate von Mg oder Zn sein. Die Carboxylate können insbesondere Salze von aliphatischen oder aromatischen Mono- oder Dicarbonsäuren sein, die gegebenenfalls durch Hydroxyl substituiert sein können. Bevorzugt sind die Salze von aliphatischen $C_1$-$C_{20}$-Monocarbonsäuren und von aromatischen $C_6$-$C_{12}$-Monocarbonsäuren. Beispiele für Carboxylate sind Formiate, Acetate, Propionate, Capronate, Oenanthate, Caprylate, Laurate, Palmitate, Stearate, Behenate, Oleate, Oxalate, Succinate, Glutarate, Adipate, Sebacate, Maleinate, Citrate, Tartrate, Benzoate oder Salicylate. Die Carboxylate können auch Salze von technischen Fettsäuregemischen sein.

Als Enolate kommen vor allem Enolate von ß-Dicarbonylverbindungen mit 5-20 C-Atomen in Frage.Beispiele für Enolate sind die Mg- oder Zn- Verbindungen von Acetylaceton, Benzoylaceton, Dibenzoylmethan, Methyl- oder Ethyl-acetoacetat. Beispiele für Phenolate sind Mg- und Zn-Verbindungen von Phenol, Kresol, Xylenol, von höher alkylierten Phenolen oder von O-Acetylphenol.

Es können auch Gemische solcher Verbindungen verwendet werden. Bevorzugt verwendet man als Komponente (b) ein Oxid, Acetylacetonat oder das Salz einer aliphatischen Monocarbonsäure von Magnesium oder Zink. Die aliphatische Monocarbonsäure enthält bevorzugt 1-20 C-Atome.

Der Effekt der Magnesium- und Zinkverbindungen ist vor allem deshalb überraschend, weil die entsprechend Calciumverbindungen praktisch keine synergistische Wirkung haben. Die Magnesium- und Zinkverbindungen allein haben keine oder nur schwache stabilisierende Wirkung, man kann sie daher als Costabilisatoren für Polyalkylpiperidin-Lichtschutzmittel betrachten.

Die Menge der zugesetzten Stabilisatoren hängt ab vom jeweiligen Substrat und dem gewünschten Stabilisierungsgrad. Die Komponente (a) wird vorzugsweise in einer Menge von 0,01 bis 5 Gew.-%, insbesondere von 0,05 bis 1 Gew.-%, bezogen auf das Polymere, zugesetzt. Die Komponente (b) wird vorzugsweise in einer Menge von 0,005 bis 1 Gew.-%, insbesondere 0,05 bis 0,5 Gew.-%, bezogen auf das Polymere, zugesetzt.

Der Zusatz kann vor, während oder nach der Herstellung des Polymeren erfolgen, jedoch vor oder während dessen Formgebung. Die Stabilisatoren können z.B. mit dem pulverförmigen Polymeren vermischt werden

oder zur Schmelze des Polymeren zugesetz werden. Sie können auch in Form eines Masterbatch, der z.B. 5-25 % Stabilisator enthält, zugesetzt werden. Die Komponenten (a) und (b) können einzeln oder als Mischung dem Polymeren zugesetzt werden.

Ausser den erfindungsgemässen Stabilisatoren (a) und (b) können dem Polymeren auch noch andere Stabilisatoren oder sonstige in der Kunststoff-Technologie übliche Additive zugesetzt werden, wie z.B. Antioxidantien vom Phenol-Typ, UV-Absorber, Metalldesaktivatoren, Phosphite und Phosphonite oder Peroxidzerstörende Verbindungen vom Typ organischer Thioverbindungen.

Beispiele hierfür sind:

1. Antioxidantien

1.1. Alkylierte Monophenole, z.B. 2,6-Di-tert.butyl-4-methylphenol, 2-Tert.butyl-4,6-dimethylphenol, 2,6-Di-tert.butyl-4-ethylphenol, 2,6-Di-tert.butyl-4-n-butylphenol, 2,6-Di-tert.butyl-4-i-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert.butyl-4-methoxymethylphenol, 2,6-Di-nonyl-4-methylphenol.

1.2. Alkylierte Hydrochinone, z.B. 2,6-Di-tert.butyl-4-methoxyphenol, 2,5-Di-tert.butyl-hydrochinon, 2,5-Di-tert.amyl-hydrochinon, 2,6-Di-phenyl-4-octadecyloxyphenol.

1.3. Hydroxylierte Thiodiphenylether, z.B. 2,2′-Thio-bis-(6-tert.butyl-4-methylphenol), 2,2′-Thio-bis-(4-octylphenol), 4,4′-Thio-bis-(6-tert.butyl-3-methylphenol), 4,4′-Thio-bis-(6-tert.butyl-2-methylphenol).

1.4. Alkyliden-Bisphenole, z.B. 2,2′-Methylen-bis-(6-tert.butyl-4-methylphenol), 2,2′-Methylen-bis-(6-tert.butyl-4-ethylphenol), 2,2′-Methylen-bis-[4-methyl-6-(α-methylcyclohexyl)-phenol], 2,2′-Methylen-bis-(4-methyl-6-cyclohexylphenol), 2,2′-Methylen-bis-(6-nonyl-4-methylphenol), 2,2′-Methylen-bis-(4,6,di-tert.butylphenol), 2,2′-Ethyliden-bis-(4,6-di-tert.butylphenol), 2,2′-Ethyliden-bis-(6-tert.butyl-4-isobutylphenol), 2,2′-Methylen-bis-[6-(α-methylbenzyl)-4-nonylphenol], 2,2′Methylen-bis-[6-(α,α-dimethylbenzyl)-4-nonylphenol], 4,4′-Methylen-bis-(2,6-di-tert.butylphenol), 4,4′-Methylen-bis-(6-tert.butyl-2-methylphenol), 1,1-Bis-(5-tert.butyl-4-hydroxy-2-methylphenyl)-butan, 2,6-Bis-(3-tert.butyl-5-methyl-2-hydroxybenzyl)-4-methylphenol, 1,1,3-Tris-(5-tert.butyl-4-hydroxy-2-methylphenyl)-butan, 1,1-Bis-(5-tert.butyl-4-hydroxy-2-methylphenyl)-3-n-dodecylmercaptobutan, Ethylenglycol-bis-[3,3-bis-(3′-tert.butyl-4′-hydroxyphenyl)-butyrat], Bis-(3-tert.butyl-4-hydroxy-5-methylphenyl)-dicyclopentadien, Bis-[2-(3′-tert.butyl-2′-hydroxy-5′-methyl-benzyl)-6-tert.butyl-4-methyl-phenyl]-terephthalat.

1.5 Benzylverbindungen, z.B. 1,3,5-Tris-(3,5,-di-tert.butyl-4-hydroxybenzyl)-2,4,6-trimethylbenzol, Bis-(3,5-di-tert.butyl-4-hydroxybenzyl)-sulfid, 3,5-Di-tert.butyl-4-hydroxybenzyl-mercaptoessigsäure-isooctylester, Bis-(4-tert.butyl-3-hydroxy-2,6-dimethylbenzyl)dithiolterephthalat, 1,3,5-Tris-(3,5-di-tert.butyl-4-hydroxybenzyl)-isocyanurat, 1,3,5-Tris-(4-tert.butyl-3-hydroxy-2,6-dimethylbenzyl)-isocyanurat, 3,5-Di-tert.butyl-4-hydroxybenzyl-phosphonsäure-dioctadecylester, Ca-Salz des 3,5-Di-tert.butyl-4-hydroxybenzyl-phosphonsäure-monoethylester, 1,3,5-Tris-(3,5-dicyclohexyl-4-hydroxybenzyl)isocyanurat.

1.6. Acylaminophenole, z.B. 4-Hydroxy-laurinsäureanilid, 4-Hydroxystearinsäureanilid, 2,4-Bis-(octylmercapto)-6-(3,5-di-tert.butyl-4-hydroxyanilino)-s-triazin, N-(3,5-di-tert.butyl-4-hydroxyphenyl)-carbaminsäureoctylester.

1.7. Ester der ß-(3,5-Di-tert.butyl-4-hydroxyphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxyethyl)-isocyanurat, N,N′-Bis-(hydroxyethyl)-oxalsäurediamid.

1.8. Ester der ß-(5-tert.Butyl-4-hydroxy-3-methylphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)ethyl-isocyanurat, N,N′-Bis-(hydroxyethyl)-oxalsäurediamid.

1.9. Ester der ß-(3,5-Dicyclohexyl-4-hydroxyphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)ethyl-isocyanurat, N,N′-Bis-(hydroxyethyl)-oxalsäurediamid.

1.10. Amide der ß-(3,5,-Di-tert.butyl-4-hydroxyphenyl)-propionsäure, wie z.B. N,N′-Bis-(3,5-di-tert.butyl-4-hydroxyphenylpropionyl)-hexamethylendiamin, N,N′-Bis-(3,5-di-tert.butyl-4-hydroxyphenylpropionyl)-trimethylendiamin, N,N′-Bis-(3,5-di-tert.butyl-4-hydroxyphenylpropionyl)-hydrazin.

2. UV-Absorber

2.1. 2-(2′-Hydroxyphenyl)-benztriazole, wie z.B. das 5′-Methyl-, 3′, 5′-Di-tert.butyl-, 5′-tert.Butyl-, 5′-(1,1,3,3-Tetramethylbutyl)-, 5-Chlor-3′,5′-di-tert.butyl-, 5-Chlor-3′-tert.butyl-5′-methyl-, 3′-sec.Butyl-5′-tert.butyl, 4′-Octoxy-, 3′,5′-Di-tert.amyl-, 3′, 5′-Bis-(α,α-dimethylbenzyl)-Derivat.

2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.

2.3. Ester von gegebenenfalls substituierten Benzoesäuren, wie z.B. 4-tert.Butyl-phenylsalicylat, Phenylsalicylat, Octylphenyl-salicylat, Dibenzoylresorcin, Bis-(4-tert.butylbenzoyl)-resorcin, Benzoylresorcin, 3,5-Di-tert.butyl-4-hydroxybenzoesäure-2,4-di-tert.butylphenylester, 3,5-Di-tert.butyl-4-hydroxybenzoesäurehexadecylester.

2.4. Acrylate, wie z.B. α-Cyan-ß,ß-diphenylacrylsäure-ethylester bzw. -isooctylester, α-Carbomethoxy-zimtsäuremethylester, α-Cyano-ß-methyl-p-methoxy-zimtsäuremethylester bzw. -butylester, α-Carbomethoxy-p-methoxy-zimtsäure-methylester, N-(ß-Carbomethoxy-ß-cyanovinyl)-2-methylindolin.

2.5. Nickelverbindungen, wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert.butylbenzylphosphonsäure-monoalkylestern, wie vom Methyl- oder Ethylester, Nickelkomplexe von Ketoximen, wie von 2-Hydroxy-4-methyl-phenyl-undecylketonoxim, Nickelkomplexe des 1-Phenyl-4-lauroyl-5-hydroxy-pyrazols, gegebenenfalls mit zusätzlichen Liganden.

2.6. Oxalsäurediamide, wie z.B. 4,4'-Di-octyloxy-oxanilid, 2,2'-Di-octyloxy-5,5'-di-tert.butyl-oxanilid, 2,2'-Di-dodecyloxy-5,5'di-tert.butyl-oxanilid, 2-Ethoxy-2'-ethyl-oxanilid, N,N'-Bis-(3-dimethylaminopropyl)-oxalamid, 2-Ethoxy-5-tert.butyl-2'-ethyloxanilid und dessen Gemisch mit 2-Ethoxy-2'-ethyl-5,4'-di-tert.butyl-oxanilid, Gemische von o-und p-Methoxy- sowie von o- und p-Ethoxy-di-substituierten Oxaniliden.

3. Metalldesaktivatoren, wie z.B. N,N'-Diphenyloxalsäurediamid, N-Salicylal-N'-salicyloylhydrazin, N,N'-Bis-(salicyloyl)-hydrazin, N,N'-Bis-(3,5-di-tert.butyl-4-hydroxyphenylpropionyl)-hydrazin, 3-Salicyloylamino-1,2,4-triazol, Bis-(benzyliden)-oxalsäuredihydrazid.

4. Phosphite und Phosphonite, wie z.B. Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-diphosphit, Bis-(2,4-di-tert.butylphenyl)-pentaerythritdiphosphit, Tristearyl-sorbit-triphosphit, Tetrakis-(2,4-di-tert.butylphenyl)-4,4'-biphenylen-diphosphonit, 3,9-Bis-(2,4-di-tert.butylphenoxy)-2,4,8,10-tetraoxa-3,9-diphosphaspiro[5.5]undecan.

5. Peroxidzerstörende Verbindungen, wie z.B. Ester der 4-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrittetrakis-(4-dodecylmercapto)-propionat.

6. Polyamidstabilisatoren, wie z.B. Kupfersalze in Kombination mit Jodiden und/oder Phosphorverbindungen und Salze des zweiwertigen Mangans.

Weiterhin können sonstige in der Kunststoff-Technologie übliche Additive zugesetzt werden, wie z.B. Pigmente, Füllstoffe, Verstärkungsmittel, Gleitmittel, Flammschutzmittel Antistatica, Treibmittel oder Weichmacher.

Im Falle der Stabilisierung von Polyolefinen mit Magnesium- oder Zinksalzen setzt man keine UV-Absorber oder Pigmente zu.

Die so stabilisierten Polymeren können in verschiedenster Form angewendet werden, z.B. als Folien, Fasern, Bändchen, Platten, Gefässe, Rohre oder sonstige Profile.

Das folgende Beispiel illustriert die Erfindung näher. Darin bedeuten Teile Gewichtsteile und % Gewichts-%, sofern nicht anders angegeben.

Beispiel

100 Teile Polypropylenpulver [Schmelzindex 2,4 g/10 min (230°C, 2160 g)] werden in einem Trommelmischer mit 0,05 Teilen Pentaerythrityl-tetrakis-[ß-(3,5-di-tert.butyl-4-hydroxyphenyl)-propionat], 0,05 Teilen Tris-(2,4-di-tert.butylphenyl)-phosphit, 0,1 Teilen Ca-Stearat und die in den Tabellen angegebenen Mengen Lichtschutzmittel und Metall-Verbindungen gemischt und anschliessend in einem Extruder bei einer Temperatur von 180 bis 220°C granuliert.

Das erhaltene Granulat wird in einem zweiten Extruder mit Breitschlitzdüse (Temperatur 220 bis 260°C) zu einer Folie verarbeitet, die in Bändchen geschnitten wird, welche anschliessend bei erhöhter Temperatur im Verhältnis von 1:6 verstreckt und aufgewickelt werden (Titer der Bändchen: 700 bis 900 den; Reissfestigkeit: 5,5 bis 6,5 g/den).

Die so hergestellten Polypropylbändchen werden spannungslos auf Probenträger aufgebracht und in Florida bewittert. Nach verschiedenen Zeiten werden je 5 Prüflinge entnommen und ihre Reissfestigkeit bestimmt. Als Mass für die Schutzwirkung der einzelnen Lichtschutzmittel gilt die eingestrahlte Energie (in Kiloangleys, wobei 1 Langley 4,1868 $J/cm^2$ entspricht), bis die Reissfestigkeit der Bändchen auf 50 % des Ausgangswertes

zurückgegangen ist. Die in 2 unabhängigen Prüfserien erhaltenen Werte sind in den Tabellen 1 und 2 aufgeführt.

Als Lichtschutzmittel LS-1 wird ein Polyester der Formel

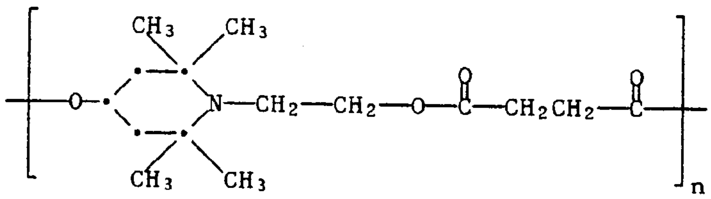

mit einem Molekulargewichts-Zahlenmittel von 3300 verwendet.

Tabelle 1

| Lichtschutzmittel | Metallverbindung | Kilolangleys (Florida) bis 50 % Reissfestigkeit |
|---|---|---|
| - | - | 23 |
| - | 0,06 % Mg-acetylacetonat | 22 |
| 0,15 % LS-1 | - | 93 |
| 0,15 % LS-1 | 0,06 % Mg-acetylacetonat | 145 |

Tabelle 2

| Lichtschutzmittel | Metallverbindung | Kilolangleys (Florida) bis 50 % Reissfestigkeit |
|---|---|---|
| - | - | 22 |
| 0,1 % LS-1 | - | 103 |
| 0,1 % LS-1 | 0,1 % Mg-oxid | 124 |
| 0,1 % LS-1 | 0,1 % Zn-oxid | 130 |
| 0,1 % LS-1 | 0,1 % Mg-acetat | 155 |
| 0,1 % LS-1 | 0,1 % Zn-acetat | 166 |
| 0,1 % LS-1 | 0,1 % Mg-stearat | 141 |
| 0,1 % LS-1 | 0,1 % Zn-stearat | 135 |

## Patentansprüche

1. Organisches Polymer, enthaltend als Stabilisator gegen Lichtabbau

(a) ein Polyalkylpiperidin-Lichtschutzmittel der Formel I,

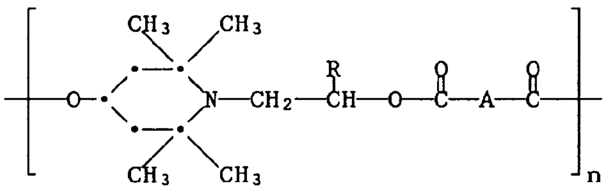

I

worin R Wasserstoff oder Methyl ist, A ein unverzweigter oder verzweigter Alkylenrest mit 2 bis 10 C-Atomen ist und n einen Wert von 2 bis 50 bedeutet, und

(b) eine Magnesium- oder Zinkverbindung aus der Reihe der Oxide, Hydroxide, Carboxylate, Enolate oder Phenolate, wobei im Falle von Polyethylen die Komponente (b) nicht ein Oxid oder Hydroxid ist, und wobei im Falle der Stabilisierung von Polyolefinen mit Magnesium- oder Zinksalzen kein UV-Absorber und kein Pigment zugesetzt wird.

2. Organisches Polymer gemäss Anspruch 1, enthaltend als Komponente (a) ein Lichtschutzmittel der Formel Ia,

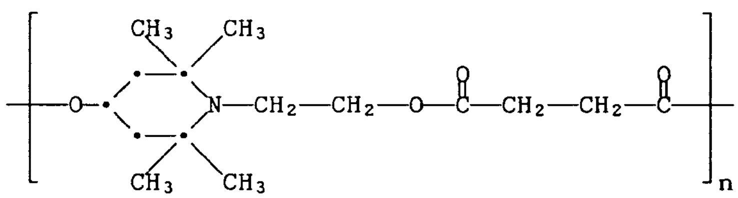

Ia

worin n ein Wert von 5 bis 20 ist.

3. Organisches Polymer gemäss Anspruch 1, enthaltend als Komponente (b) ein Oxid, ein Acetylacetonat oder ein Salz einer aliphatischen Monocarbonsäure von Magnesium oder Zink.

4. Organisches Polymer gemäss Anspruch 1, enthaltend 0,01 bis 5 Gew.-% der Komponente (a) und 0,005 bis 1 Gew.-% der Komponente (b), jeweils bezogen auf das Polymere.

5. Organisches Polymer gemäss Anspruch 1, das ein Polyolefin ist.

6. Organisches Polymer gemäss Anspruch 5, das ein Polypropylen ist.

7. Organisches Polymer gemäss Anspruch 1, das ausser den Kompensaten (a) und (b) noch andere Stabilisatoren oder sonstige in der Kunststoff-Technologie übliche Additive enthält.

8. Verfahren zum Stabilisieren von organischen Polymeren gegen Lichtabbau duch Zusatz eine Stabilisator-Gemisches, dadurch gekennzeichnet, dass man ein Gemisch aus

(a) einem Polyalkylpiperidin-Lichtschutzmittel der Formel I

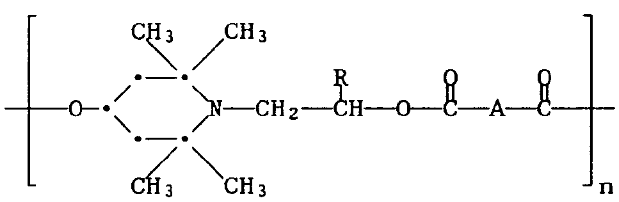

I

worin R Wasserstoff oder Methyl ist, A ein unverzweigter oder verzweigter Alkylenrest mit 2 bis 10 C-Atomen ist und n einen Wert von 2 bis 50 bedeutet, und

(b) einer Magnesium- oder Zinkverbindung aus der Reihe der Oxide, Hydroxide, Carboxylate, Enolate oder Phenolate verwendet, wobei im Falle von Polyethylen die Komponente (b) nicht ein Oxid oder Hydroxid ist, und wobei im Falle der Stabilierung von Polyolefinen mit Magnesium- oder Zinksalzen kein UV-Absorber und kein Pigment zugesetzt wird.

## Claims

1. An organic polymer containing, as a stabilizer against degradation by light,

(a) a polyalkylpiperidine light stabilizer of the formula I

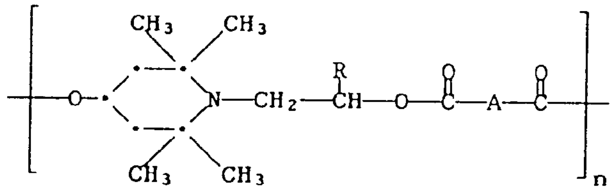

I

in which R is hydrogen or methyl, A is an unbranched or branched alkylene radical having 2 to 10 C atoms and n has a value from 2 to 50 and

(b) a magnesium or zinc compound from the series comprising oxides, hydroxides, carboxylates, enolates or phenolates, the component (b) not being an oxide or hydroxide in the case of polyethylene, and no UV absorber and no pigment being added in the case where polyolefins are stabilized using magnesium salts or zinc salts.

2. An organic polymer according to claim 1, containing, as the component (a), a light stabilizer of the formula Ia

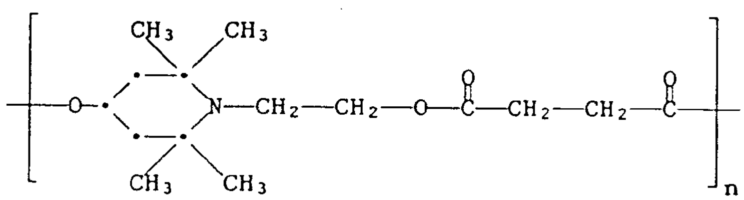

Ia

in which n has a value from 5 to 20.

3. An organic polymer according to claim 1, containing, as the component (b), an oxide, an acetylacetonate or a salt of an aliphatic monocarboxylic acid of magnesium or zinc.

4. An organic polymer according to claim 1, containing 0.01 to 5% by weight of the component (a) and 0.005 to 1% by weight of the component (b), in each case relative to the polymer.

5. An organic polymer according to claim 1, which is a polyolefin.

6. An organic polymer according to claim 5, which is a polypropylene.

7. An organic polymer according to claim 1, which, in addition to the components (a) and (b), also contains further stabilizers or other additives customary in plastics technology.

8. A process for stabilizing organic polymers against degradation by light by adding a mixture of stabilizers, which comprises using a mixture of

(a) a polyalkylpiperidine light stabilizer of the formula I

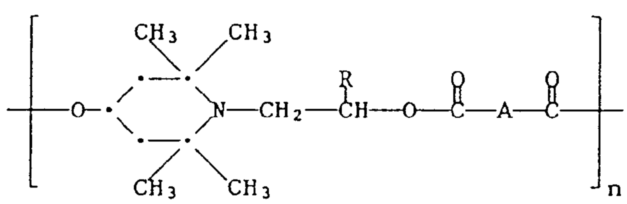

I

in which R is hydrogen or methyl, A is an unbranched or branched alkylene radical having 2 to 10 C atoms and n has a value from 2 to 50, and

(b) a magnesium or zinc compound from the series comprising oxides, hydroxides, carboxylates, enolates or phenolates, the component (b) not being an oxide or hydroxide in the case of polyethylene, and no UV absorber and no pigment being added in the case where polyolefins are stabilized using magnesium salts or zinc salts.

## Revendications

1. Matière polymère organique contenant comme stabilisant contre des dégradations à la lumière :

a) comme agent de protection à la lumière une polyalkylpipéridine de formule I ci-dessous :

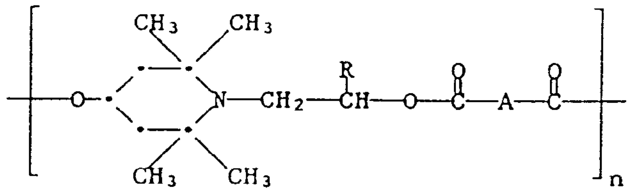

I

dans laquelle R représente l'hydrogène ou le groupe méthyle, A un radical alkylène linéaire ou ramifié ayant de 2 à 10 atomes de carbone et n un nombre de 2 à 50, avec

b) un composé de magnésium ou de zinc pris parmi les oxydes, hydroxydes, carboxylates, oenolates et phénolates, dans le cas de polyéthylène le composant (b) n'étant ni un oxyde ni un hydroxyde de magnésium ou de zinc et dans le cas de la stabilisation de polyoléfines avec des sels de magnésium ou de zinc aucun absorbeur d'ultraviolet et aucun pigment n'étant ajoutés à la polyoléfine.

2. Matière polymère selon la revendication 1 qui contient comme composant (a) un agent de protection à la lumière de formule Ia :

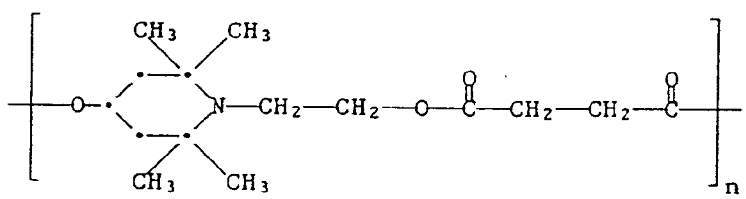

Ia

le nombre n étant compris entre 5 et 20.

3. Matière polymère selon la revendication 1 qui contient comme composant (b) un oxyde ou un acétylacétonate de magnésium ou de zinc ou un sel de magnesium ou de zinc d'un acide monocarboxylique aliphatique.

4. Matière polymère selon la revendication 1 qui contient de 0,01 à 5% du composant (a) et de 0,005 à 1% du composant (b), par rapport au poids de la matière polymère.

5. Matière polymère selon la revendication 1 qui est une polyoléfine.

6. Matière polymère selon la revendication 5 qui est un polypropylène.

7. Matière polymère selon la revendication 1 qui contient en outre d'autres stabilisants ou autres additifs courants dans la technologie des matières plastiques.

8. Procédé de stabilisation de matières polymères organiques pour les protéger des dégradations sous l'action de la lumière en leur ajoutant un mélange de stabilisants, procédé caractérisé en ce qu'on leur ajoute un mélange de :

a) comme agent de protection à la lumière une polyalkylpipéridine de formule I ci-dessous :

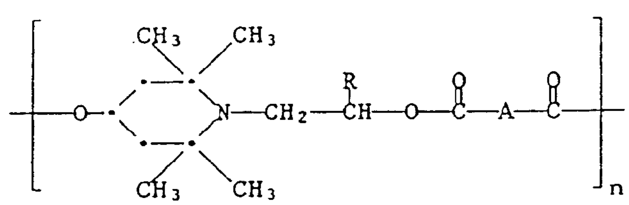

I

dans laquelle R représente l'hydrogène ou le groupe méthyle, A un radical alkylène linéaire ou ramifié ayant de 2 à 10 atomes de carbone et n un nombre de 2 à 50, et

b) un composé de magnésium ou de zinc pris parmi leurs oxydes, hydroxydes, carboxylates, énolates et phénolates, dans le cas de polyéthylène le composant (b) n'étant ni un oxyde ni un hydroxyde de magnésium ou de zinc et dans le cas de la stabilisation de polyoléfines avec des sels de magnésium ou de zinc aucun absorbeur d'ultraviolet ni aucun pigment n'étant ajoutés à la polyoléfine.